# EUROPEAN PATENT APPLICATION

(11) **EP 4 273 587 A1**
(43) Date of publication of application: **08.11.2023**
(21) Application number: 22171529.5
(22) Date of filing: 04.05.2022
(51) Int. Cl.: G01T 1/17, G01T 1/20

(54) **PHOTON COUNTING DETECTOR AND PHOTON COUNTING METHOD**

(71) Applicant: Koninklijke Philips N.V., 5656 AG Eindhoven (NL)
(72) Inventor: FRACH, Thomas, Eindhoven (NL); SOLF, Torsten Jörn, Eindhoven (NL)
(74) Representative: Philips Intellectual Property & Standards

(57) **Abstract**

The present invention relates to a photon counting detector and method. The detector (2) comprises a scintillator (10) configured to convert incident gamma radiation into optical photons, a pixelated photodetector (11) configured to detect the flux of optical photons, and circuitry (12). The circuitry is configured to determine, per photodetector pixel, a photon count by accumulating the number of optical photons detected by the respective photodetector pixel during an integration time period, compare, per photodetector pixel or group of photodetector pixels, a single photon count or multiple photon counts to a counting threshold, detect an event if, per photodetector pixel or group of photodetector pixels, the one or more photon counts exceed the counting threshold, and temporarily adapt the counting threshold for use in the comparison in one or more subsequent integration time periods based on the energy of the detected event.

## Description

### FIELD OF THE INVENTION

The present invention relates to a photon counting detector, a corresponding photon counting method and an imaging apparatus comprising a photon counting detector for detection of radiation, in particular gamma radiation and x-ray radiation.

### BACKGROUND OF THE INVENTION

Photon counting has conventionally been implemented using photomultiplier tube (PMT) detectors, which comprise a light-sensitive photocathode and a set of "multiplier" anode terminals. The photocathode emits at least one electron responsive to impingement of a photon, and the electron(s) in turn strike successive anode terminals with each such event causing emission of a cascade of electrons, thus producing a multiplication effect that results in a measurable electrical pulse. A PMT is capable of high-speed photon counting. PMT detectors have disadvantages including being relatively bulky discrete devices with large optical windows that operate at high voltage and are susceptible to failure due to the evacuated tube design and the high operational electrical voltage. A radiation detector of this kind is e.g. disclosed in US 8,723,132 B2.

Silicon photomultiplier (SiPM) devices have been developed to overcome some of these disadvantages, and to provide photon-counting detectors that are readily integrated with silicon-based signal/data processing circuitry. In some embodiments, a SiPM device employs an avalanche photodiode as the light sensor. When biased above its breakdown voltage, the avalanche diode goes into breakdown responsive to impingement of a single photon. Such a device is sometimes called a single photon avalanche diode (SPAD) detector. In a typical SPAD detector, the avalanche photodiode is reverse biased above its breakdown voltage and is in series with a quenching resistor. Impingement of a single photon causes the p-n junction to break down in a multiplicative (i.e., "avalanche") cascade of electrons that flow in the SPAD detector as a measurable electrical current. This current is quenched relatively quickly as voltage over the resistor due to the current flow lowers the reverse bias across the avalanche diode to a level below its break down voltage. Additionally or alternatively, an active quenching sub-circuit comprising (for example) one or more diodes, resistors, and/or transistors can provide more rapid quenching. Some illustrative examples of SiPM detector arrays are disclosed US 9,268,033 B2 and US 10,078,141 B2.

Digital silicon photomultipliers are used as photon counting detectors (sometimes also called photon detectors) in high-performance PET/CT systems. Coupled to a time-of-flight capable scintillator, the fast trigger logic of the digital silicon photomultiplier enables time resolution in the range of lOOps - 200ps. Time resolution of these systems is limited, among others, by the time spread of the scintillation process. New detector concepts using prompt photons have been proposed, potentially offering improvement of time resolution significantly below 100ps.

Indirect photon counting spectral CT uses fast scintillator crystals coupled to fast sampling single photon detectors to detect and measure the energy of single x-ray quanta. The detection of the x-ray signal, however, is hindered by the presence of pile-up due to high x-ray flux, especially when the scintillator material exhibits a significant slow decay next to a fast component, which makes it difficult to realize short integration times, which are important for high count rate capability.

### SUMMARY OF THE INVENTION

It is an object of the present invention to resolve or at least reduce the problem of pile-up of detector pixels.

In a first aspect of the present invention a photon counting detector is presented comprising:
a scintillator configured to convert incident gamma radiation into optical photons,
a pixelated photodetector configured to detect the flux of optical photons,
circuitry configured to
   - determine, per photodetector pixel, a photon count by accumulating the number of optical photons detected by the respective photodetector pixel during an integration time period,
   - compare, per photodetector pixel or group of photodetector pixels, a single photon count or multiple photon counts to a counting threshold,
   - detect an event if, per photodetector pixel or group of photodetector pixels, the one or more photon counts exceed the counting threshold, and
   - temporarily adapt the counting threshold for use in the comparison in one or more subsequent integration time periods based on the energy of the detected event.

In a further aspect of the present invention a corresponding photon counting method is presented.

In a still further aspect of the present invention an imaging apparatus comprising a photon counting detector as disclosed herein is presented.

Preferred embodiments of the invention are defined in the dependent claims.

Photon counting detectors, e.g. for indirect conversion photon counting spectral CT, comprise a scintillator (e.g. fast scintillator crystals) coupled to a pixelated photodetector (e.g. single optical photon detectors, such as analog or digital silicon photomultipliers). Additional circuitry provides a sampled waveform of the optical photon flux out of the scintillator. One problem of detecting individual radiation quanta (e.g. x-ray or gamma quanta) in the sampled waveform lies in the reliable detection of the beginning of each event, especially in the presence of pile-up of multiple pulses that can significantly overlap when the scintillator material exhibits a slow decay component of e.g. several 10 or 100ns. As part of the signal of previous radiation is still present, it adds to the signal of the current radiation photon and increases its value.

Further, to actually detect the start of a new event, a counting threshold value used by a comparator has to be set higher in order to detect the transition to a new pulse. Setting the threshold too high, however, makes the detector blind for low energy radiation photons. Setting the threshold too low will enable the acquisition of low energies, which are important indicators e.g. in a spectral CT image, but at the same time, will lead to "after-pulses" in case of high energy photons, as the detector will trigger in the slow tail of the scintillation light in case of high-energy radiation. These false detections will end up in the low energy bin and will increase the noise or lead to artefacts. This issue gets more severe in the presence of high pile-up and optical crosstalk between neighboring pixels.

To overcome these problems, the counting threshold (also called trigger threshold or comparator threshold) to which a single photon count or multiple photon counts is / are compared for detecting an event (per photodetector pixel or a group of photodetector pixels) if the one or more photon counts exceed the counting threshold, is temporarily adapted the counting threshold for use for comparison in one or more subsequent integration time periods based on the energy of the detected event.

To avoid too many adaptations of the counting threshold, the circuitry is configured in an embodiment to temporarily adapt the counting threshold only if a predetermined energy threshold, i.e. a minimum energy level, is exceeded by the detected event. For instance, in an embodiment the counting threshold may be adapted only if a predetermined energy threshold is exceeded, by the detected event or average event, by at least an amount of 30 keV, in particular an amount in the range of 60 keV to 120 keV, or by at least a percentage of 50 %, in particular a percentage in the range of 100 % to 200 %, (assuming e.g. a mean energy of an average event of 60 keV).

In an implementation, the circuitry is configured to use one of multiple predetermined energy thresholds, in particular energy-dependent predetermined energy thresholds, and/or to adapt the counting threshold based on the used predetermined energy threshold and/or the energy of the detected event. For instance, for lower energies a lower energy threshold may be applied compared to higher energies. Further, for higher energies the counting threshold may be increase by a larger extent compared to higher energies.

In a preferred embodiment the circuitry is configured to temporarily adapt, in particular to temporally increase, the counting threshold depending on the amount or percentage, by which a predetermined energy threshold, i.e. a minimum energy level, is exceeded by the detected event. Thus, depending on the actual situation, the adaptation of the threshold may be controlled to avoid a too strong or too weak adaptation.

For instance, as provided in an embodiment, the counting threshold may be temporarily increased based on the energy of the detected event by a preset value or a value that is higher the more the predetermined energy threshold is exceeded by the detected event. Hence, if there has been a high energy event the counting threshold may be increased by a larger amount than if there has been a middle or small energy event, which reduces the effect of pile-ups but avoids that the detector gets "blind" for smaller energy events. Hereby, in a practical implementation the circuitry may be configured to temporarily increase the counting threshold by at least an amount of 20 keV, in particular an amount in the range of 30 keV to 60 keV, or by at least a percentage of 20%, in particular a percentage in the range of 25 % to 50 %.

In another embodiment the circuitry may be configured to temporarily increase the counting threshold and to control the counting threshold to decrease over time to a baseline counting threshold value after the increase. For the decrease, generally any function may be used after the increase. For instance, a linear or logarithmic or hyperbolic decrease may be implemented. The baseline counting threshold valued should generally be low enough to enable the detection of low energy radiation quanta, e.g. gamma quanta in the range of 20 keV to 30 keV.

Regarding the timing of the decrease, in an embodiment the counting threshold may be controlled to decrease over time to the baseline counting threshold value within a time interval in the range of a fraction of the scintillator decay time or in the range of 5 to 200 ns, in particular in the range of 10 to 100 ns, or until a next detected event triggers a new temporary adaptation of the counting threshold.

In another embodiment the circuitry may be configured to determine the temporary increase by multiplying a predetermined factor with one of:
- the energy of the detected event,
- the number photon counts of the detected event, and
- the average energy of the energy bin, to which the detected event has been assigned. The predetermined factor may be set in advance, e.g. by the user or manufacturer of the detector, or may be modifiable by the user depending on the kind of application, the imaging modality, the imaging system, etc. In an exemplary implementation the predetermined factor may be set in the range of 25 % to 50 % of the corresponding energy or energy bin.

In a simple implementation the circuitry is configured to temporarily increase the counting threshold by adding an offset to a baseline counting threshold value, wherein the offset is computed or taken from a look-up table based on the energy of the detected event.

The circuitry may further be configured to limit the temporary increase of the counting threshold to a maximum counting threshold value or to a maximum percentage or to half of the maximum photon energy of the detected event. This avoids a too strong increase and thus the risk of being unable to detect too weak events. For instance, the temporary increase of the counting threshold may be limited to a maximum counting threshold value in the range of 25 % to 50 % of the sampled energy.

The pixelated photodetector may preferably be a silicon photomultiplier (SiPM) detector, wherein each detector pixel comprises an array of silicon avalanche photo diodes (SPADs).

The claimed imaging apparatus that comprises a photon counting detector as disclosed herein may e.g. be a PET apparatus, a CT apparatus, a SPECT apparatus, a Time-of-Flight (TOF) PET apparatus, or a Compton camera.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of a conventional photon counting detector.
Fig. 2 shows diagrams of typical energy histograms and corresponding count rates for a conventional photon counting detector.
Fig. 3 shows a schematic diagram of an embodiment of a photon counting detector according to the present invention.
Fig. 4 shows diagrams of typical energy histograms and corresponding count rates for a photon counting detector according to the present invention.
Fig. 5 shows diagrams of a scintillator input, the setting of the counting threshold and a detection signal of detected events for a conventional photon counting detector.
Fig. 6 shows diagrams of the same scintillator input, the adaptable setting of the counting threshold and a detection signal of detected events for a photon counting detector according to the present invention.
Fig. 7 shows a diagram of an exemplary setting of the counting threshold according to the present invention.

### DETAILED DESCRIPTION OF THE INVENTION

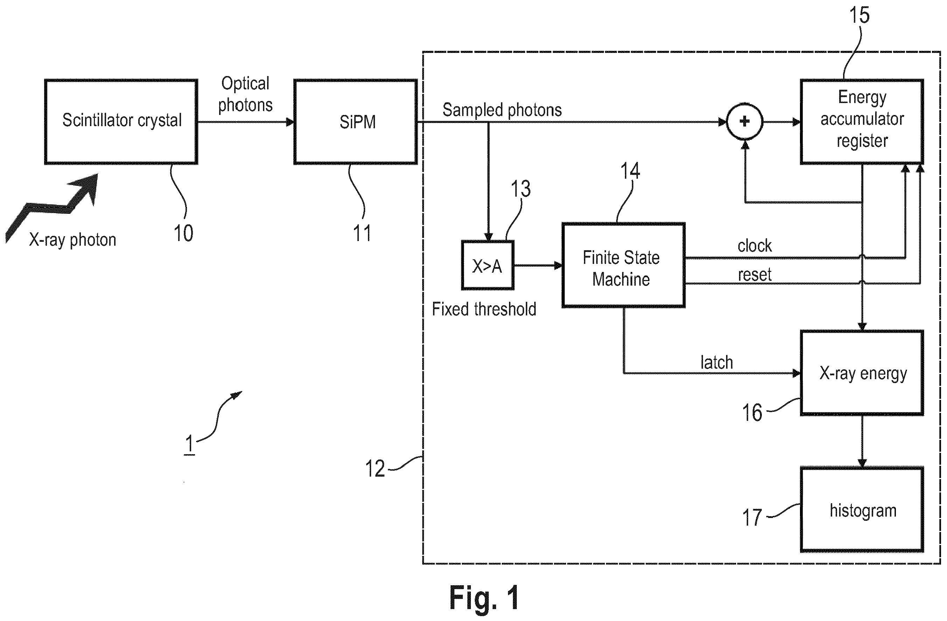

Fig. 1 shows a schematic diagram of a conventional photon counting detector 1, in particular a scintillator-based spectroscopic photon counting detector with a fixed threshold. The detector 1 comprises a scintillator 10 that converts incident gamma radiation (e.g. x-ray radiation) into optical photons and a pixelated photodetector 11 (e.g. a digital SiPM) that detects and samples the flux of optical photons, providing a number of detected photons every e.g. 5ns. The detected optical photons are further processed and evaluated by circuitry 12 (or corresponding units).

In a comparison unit 13 the number X of detected photons (or a sum of several samples) is compared to a fixed threshold A. If the value X exceeds A, an event is detected and a finite state machine 14 starts an acquisition by accumulating a predefined number of samples in an energy accumulator 15. At the end of the acquisition, the accumulator value is stored in an x-ray energy register 16 and the accumulator 15 is reset in preparation for the next event. The value stored in the energy register 16 is then sorted in an energy histogram 17, where the corresponding bin is increased.

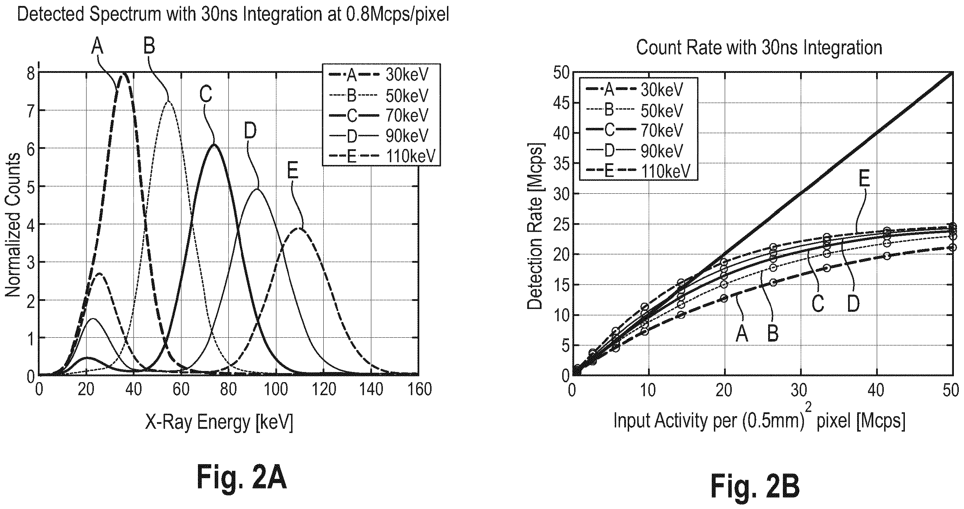

Fig. 2 shows diagrams of typical energy histograms and corresponding count rates for a conventional photon counting detector. Fig. 2A shows an example of energy histograms of simulated mono-energetic inputs with a fixed energy threshold. The corresponding count rates are shown in Fig. 2B. The example in Fig. 2 shows the intrinsic problem of using a fixed threshold for a large range of input energies, creating false energy hits for high energy quanta. This effect can be clipped by a low energy threshold but remains in false count rates in the energy histogram. A low threshold also makes the detection more sensitive to pile-up, i.e., overlap of detected light pulses in time and space.

An element of the present invention is a variable threshold level that is temporarily adapted, in particular increased, based on the previously detected energies, and which has a time-variable component that is decreasing over time to restore the original (baseline) threshold.

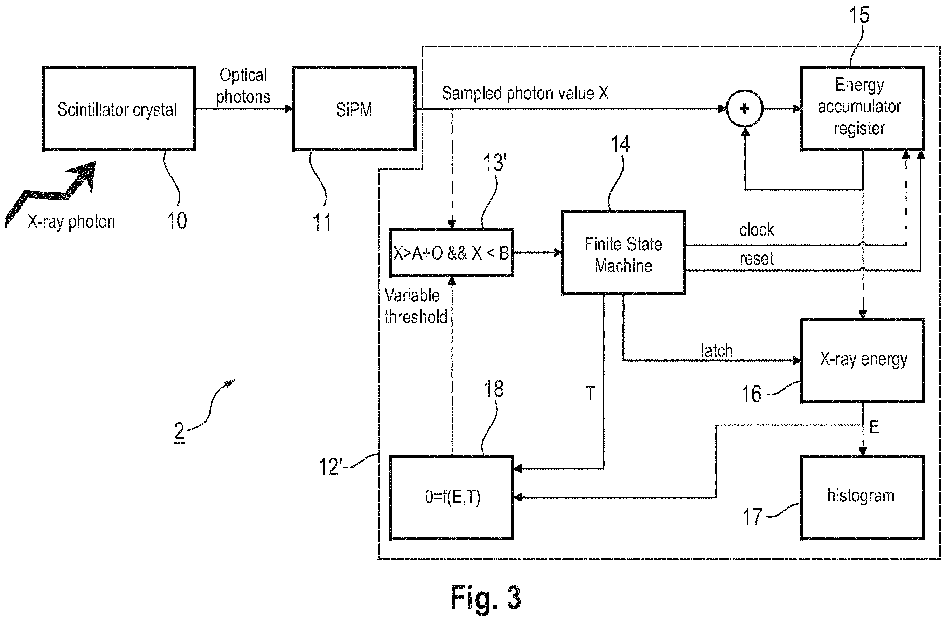

Fig. 3 shows a schematic diagram of an embodiment of a photon counting detector 2 according to the present invention. The general structure of the detector chain stays the same as illustrated above with reference to Fig. 1, and the same reference numerals are used. The main difference is that in the circuitry 12' a variable threshold is used by the comparison unit 13' instead of a fixed threshold as used by the comparison unit 13. This is implemented in this embodiment by use of an offset unit 18 that provides an additional offset value O, which is added to the fixed energy threshold A (also called baseline threshold value).

Optionally, in addition an upper limit value B is defined to prevent the threshold to exceed some maximum value and render the pixel insensitive.

Assuming the offset O is initially at 0, an event is started in a similar way as explained above with reference to Fig. 1. After the energy of the event has been acquired and latched in the x-ray energy register 16, the offset unit 18 computes the threshold offset O based on a predetermined function, e.g. a strictly monotonically decreasing function f(E, T), with E being the energy of the last event and T being a time counted from the end of the last acquisition. The goal of the function f is to provide an offset based on the energy E of the previous event and reducing back to 0 within a time interval based on f(T).

In a simple implementation, f(E, T) scales E by a factor that is smaller than 1.0 to estimate the start value of O. This value is stored in a register O that is added to the register A. Subsequently, the register O may be decremented by 1 every clock sample until it reaches the value 0, or a new value for O is set by a following event.

The advantage of this method is that the fixed threshold A can be set to a much lower value, thereby preserving the detection of low-energy x-rays while suppressing the detection of the slow-tail component in high-energy events.

For illustration, a simple example shall be given, assuming the user-preset threshold (i.e. the value A) is set to 10 optical photons and the interesting signal range lies between 30 and 120 photons. It is further assumed as an example that the scintillator 10 exhibits a slow decay component of several 10ns and a fast component of few ns and that the ratio between fast component and slow component is 2:1. Upon detection of a 120 photon event, there would be about 40 photons in the slow component, thereby leading to a second "event" after the integration of the fast component (which if preferred due to higher immunity to pile-up). The proposed method temporarily increases the threshold (i.e. A = 10 photons) by a value (i.e. the offset O) dependent on the detected energy in the fast component (e.g. by 50% of the fast component = 50% of 80 photons = 40 photons) to 50 photons, which prevents re-triggering on the slow decay component.

To restore the previous threshold (i.e. A= 10), this additional offset is decremented by a fixed (or variable) value every clock cycle. Thus, this method temporarily increases the threshold after a high-energy event and restores its original value within a given (fixed or variable) number of clocks.

In preferred embodiments there may be a lower energy limit to apply this correction and there also may be an upper limit to the threshold. The offset can be selected based on the measured energy of the previous x-ray photon (e.g. an integral value scaled by a fixed factor) or as a user-selected value depending on the energy bin the last x-ray photon was sorted into. The threshold recovery function can be linear or some other suitable function, such as hyperbolic or logarithmic.

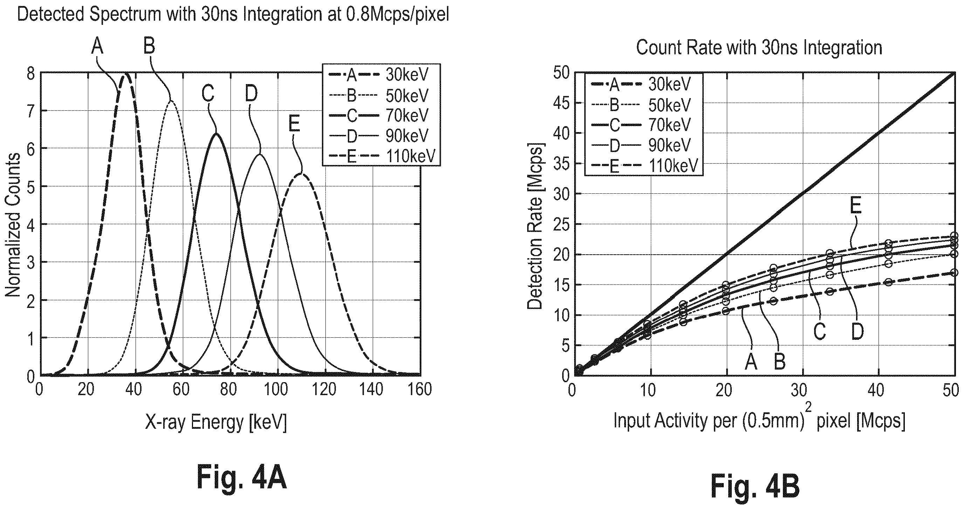

Fig. 4 shows diagrams of typical energy histograms and corresponding count rates for a photon counting detector according to the present invention. As shown in Fig. 4A, the proposed adaptive thresholding improves the separation of energy histograms considerably (i.e. well separated energy peaks), removing false low energy hits for high energy inputs. In addition, as shown in Fig. 4B, the count rates are estimated correctly, following a deadtime model for high rates.

Thus, the proposed invention overcomes the problems of known photon counting detectors by adaptive changes of the counting threshold.

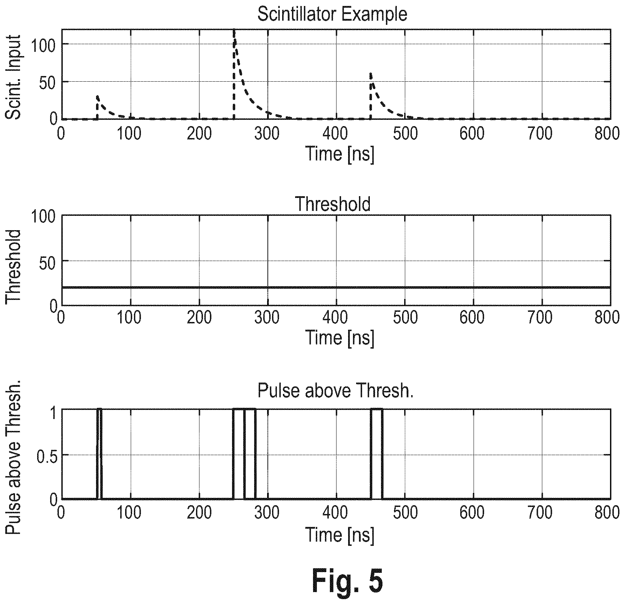

Fig. 5 shows diagrams of a scintillator input, the setting of the counting threshold and a detection signal of detected events for a conventional photon counting detector. The signal (scintillator input) and the counting threshold are each represented by number of detected optical photons (which is the sum of several samples; this number translates into keV with a simple gain conversion factor). The detection signal is a logical signal.

The example shows three detected gamma pulses from the scintillator with different energies. As can be seen, a fixed threshold setting can create multiple hits if integration time is short. In particular, the fixed threshold detection can lead to double sampling of the high energy pulse in the middle when integrating only a fraction of the pulse in the period of 250 ns to 280 ns, by starting a new integration right away.

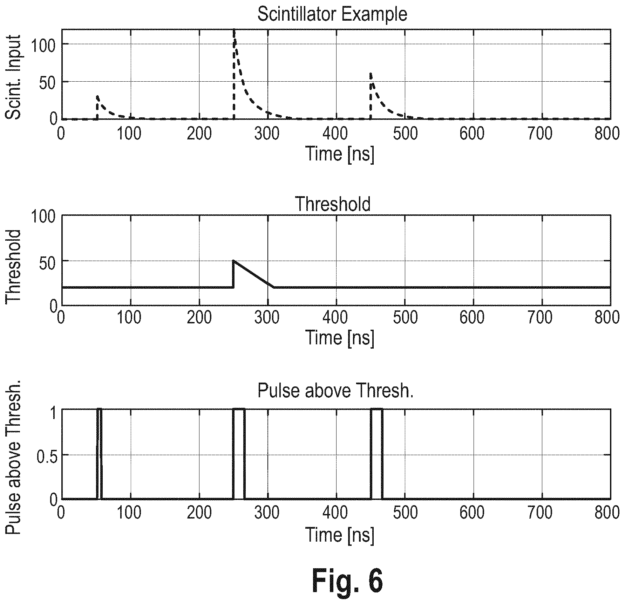

Fig. 6 shows diagrams of the same scintillator input, an adaptable setting of the counting threshold and a detection signal of detected events for a photon counting detector according to the present invention. As shown there, the threshold is increased following detection of the first event by adding an offset to the baseline threshold value and then slowly decreasing the threshold over a certain time period back to its baseline value (in this example following a linearly decreasing function). This prevents the double sampling of the high energy pulse.

In embodiments of the present invention, spatial and dynamic adaptations may be made. The present invention provides programmable thresholding for every pixel (or groupwise for groups of neighboring pixels) in the detection area, where parameters like the minimum and maximum threshold and the gradient can be changed individually (over space). In addition, control parameters for the threshold can also be adapted during the scan (over time), even after each integration period (typical values are approximately 100µs) to change behavior on measured or expected count rates.

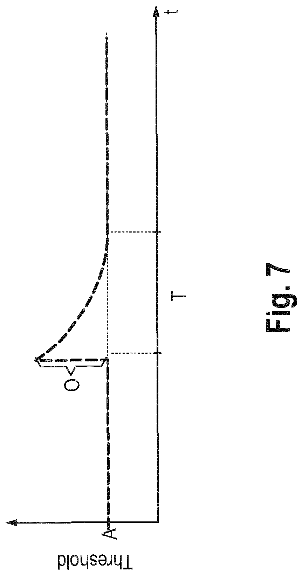

Fig. 7 shows a diagram of an exemplary setting of the counting threshold according to the present invention. It shows how the threshold is increased from a baseline value A to an increased value B by adding an offset O and then letting the offset slowly decrease back to zero so that the threshold value returns to A.

One or more parameters can hereby be controlled, e.g. by the user or manufacturer, for instance based on the kind of application, the imaging equipment, etc.:
- the baseline value A (typically e.g. in a range of 20 keV to 30 keV);
- the offset value O (typically in a range of 30 keV to 60 keV or a percentage of A in the range of 25 % to 50 %);
- the function for decreasing the increased value back to offset;
- the time period T from beginning to end of the increase (typically in a range of 50 ns to 250 ns;
- a factor for determining the offset O by multiplying the factor with the energy of the detected event, or the number photon counts of the detected event, or the average energy of the energy bin, to which the detected event has been assigned (typically the factor is in the range of 25 % to 50 % of the corresponding energy or energy bin); and
- an upper limit for the increased counting threshold (typically in the range of 25 % to 50 % of the sampled energy).

The present invention overcomes the problem of false hits when sampling high energies with a low threshold in combination with a short integration time. It enables clear energy separation by an adaptive thresholding and provides exact count rates and energy band separation. The present invention is especially useful in systems using scintillator material having a fast and a slow decay.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Photon counting detector comprising:
a scintillator (10) configured to convert incident gamma radiation into optical photons,
a pixelated photodetector (11) configured to detect the flux of optical photons,
circuitry (12) configured to
- determine, per photodetector pixel, a photon count by accumulating the number of optical photons detected by the respective photodetector pixel during an integration time period,
- compare, per photodetector pixel or group of photodetector pixels, a single photon count or multiple photon counts to a counting threshold,
- detect an event if, per photodetector pixel or group of photodetector pixels, the one or more photon counts exceed the counting threshold, and
- temporarily adapt the counting threshold for use in the comparison in one or more subsequent integration time periods based on the energy of the detected event.

2. Photon counting detector as claimed in claim 1,
wherein the circuitry (12) is configured to temporarily adapt the counting threshold only if a predetermined energy threshold is exceeded by the detected event.

3. Photon counting detector as claimed in claim 2,
wherein the circuitry (12) is configured to temporarily adapt the counting threshold only if a predetermined energy threshold is exceeded, by the detected event or average event, by at least an amount of 30 keV, in particular an amount in the range of 60 keV to 120 keV, or by at least a percentage of 50 %, in particular a percentage in the range of 100 % to 200 %.

4. Photon counting detector as claimed in claim 3,
where the circuitry is configured to use one of multiple predetermined energy thresholds, in particular energy-dependent predetermined energy thresholds, and/or to adapt the counting threshold based on the used predetermined energy threshold and/or the energy of the detected event.

5. Photon counting detector as claimed in claim 1,
wherein the circuitry (12) is configured to temporarily adapt, in particular to temporally increase, the counting threshold depending on the amount or percentage, by which a predetermined energy threshold is exceeded by the detected event.

6. Photon counting detector as claimed in any one of the preceding claims,
wherein the circuitry (12) is configured to temporarily increase the counting threshold based on the energy of the detected event by a preset value or a value that is higher the more the predetermined energy threshold is exceeded by the detected event.

7. Photon counting detector as claimed in claim 6,
wherein the circuitry (12) is configured to temporarily increase the counting threshold by at least an amount of 20 keV, in particular an amount in range of 30 keV to 60 keV, or by at least a percentage of 20%, in particular a percentage in the range of 25 % to 50 %.

8. Photon counting detector as claimed in claim 6,
wherein the circuitry (12) is configured to temporarily increase the counting threshold and to control the counting threshold to decrease over time to a baseline counting threshold value after the increase, in particular to control the counting threshold to decrease over time to the baseline counting threshold value according to a predetermined function after the increase.

9. Photon counting detector as claimed in claim 7 or 8,
wherein the circuitry (12) is configured to control the counting threshold to decrease over time to the baseline counting threshold value within a time interval in the range of a fraction of the scintillator decay time or in the range of 5 to 200 ns, in particular in the range of 10 to 100 ns, or until a next detected event triggers a new temporary adaptation of the counting threshold.

10. Photon counting detector as claimed in any one of claims 6 to 9,
wherein the circuitry (12) is configured to determine the temporary increase by multiplying a predetermined factor with one of:
- the energy of the detected event,
- the number photon counts of the detected event, and
- the average energy of the energy bin, to which the detected event has been assigned.

11. Photon counting detector as claimed in any one of the preceding claims,
wherein the circuitry (12) is configured to temporarily increase the counting threshold by adding an offset to a baseline counting threshold value, wherein the offset is computed or taken from a look-up table based on the energy of the detected event.

12. Photon counting detector as claimed in any one of the preceding claims,
wherein the circuitry (12) is configured to limit the temporary increase of the counting threshold to a maximum counting threshold value or to a maximum percentage or to half of the maximum photon energy of the detected event.

13. Photon counting detector as claimed in any one of the preceding claims,
wherein the circuitry (12) is configured to limit the temporary increase of the counting threshold to a maximum counting threshold value in the range of 25 % to 50 % of the sampled energy.

14. Imaging apparatus comprising a photon counting detector (2) as claimed in any one of the preceding claims.

15. Photon counting method comprising:
- determining, per photodetector pixel or group of photodetector pixels of a pixelated photodetector (11) that is configured to detect a flux of optical photons converted by a scintillator (10) from incident gamma radiation, a photon count by accumulating the number of optical photons detected by the respective photodetector pixel during an integration time period
- comparing, per photodetector pixel or group of photodetector pixels, a single photon count or multiple photon counts to a counting threshold,
- detecting an event if, per photodetector pixel or group of photodetector pixels, the one or more photon counts exceed the counting threshold, and
- temporarily adapting the counting threshold for use in the comparison in one or more subsequent integration time periods based on the energy of the detected event.
